# EUROPÄISCHE PATENTSCHRIFT

(11) **EP 3 774 501 B1**
(45) Veröffentlichungstag und Bekanntmachung des Hinweises auf die Patenterteilung: **05.10.2022**
(21) Anmeldenummer: 19718594.5
(22) Anmeldetag: 05.04.2019
(51) Int. Cl.: B62D 21/11, B62D 21/15

(54) **KAROSSERIESTRUKTUR FÜR EIN FAHRZEUG**
BODY STRUCTURE FOR A VEHICLE
STRUCTURE DE CARROSSERIE POUR VÉHICULE

(30) Priorität: 06.04.2018 DE 102018205171
(43) Veröffentlichungstag der Anmeldung: 17.02.2021
(73) Patentinhaber: Audi AG, 85045 Ingolstadt (DE)
(72) Erfinder: ISAKIEWITSCH, Christian, 85051 Ingolstadt (DE)
(86) Internationale Anmeldenummer: PCT/EP2019/058632
(87) Internationale Veröffentlichungsnummer: WO 2019/193151

(56) Entgegenhaltungen:
- DE-A1-102011 107 214
- DE-A1-102015 111 912
- US-A1- 2012 187 724

## Beschreibung

Die Erfindung betrifft eine Karosseriestruktur für ein Fahrzeug nach dem Oberbegriff des Anspruches 1.

In einem elektrisch betriebenen, zweispurigen Fahrzeug können die Vorderräder mittels zumindest einer Elektromaschine angetrieben werden. Die Elektromaschine kann von einem Vorderachsträger bzw. einem frontseitigen Hilfsrahmen getragen sein, an dem seitlich die Radlenker der Radaufhängung für die Vorderräder angebunden sind. Die zur Stromversorgung der Elektromaschine bereitgestellte Traktionsbatterie kann mit geringem Abstand vor dem frontseitigen Hilfsrahmen im Kraftfahrzeug verbaut sein, und zwar beispielhaft im Unterboden-Bereich des Fahrzeuges.

In einer solchen gattungsgemäßen Karosseriestruktur ist der Hilfsrahmen über Hilfsrahmen-Anbindungspunkte an der Fahrzeugkarosserie verschraubt. Die Schraubbolzen der Hilfsrahmen-Anbindungspunkte sind meist in Fahrzeughochrichtung ausgerichtet. Eine solche Ausrichtung der Schraubbolzen in Fahrzeughochrichtung führt in einem Frontcrashfall zu folgender Problematik: Im Frontcrashfall werden die Aufprallkräfte zunächst in den Hilfsrahmen eingeleitet und in einem Lastpfad über die Hilfsrahmen-Anbindungspunkte in die Karosseriestruktur weitergeleitet. Die in der Fahrzeughochrichtung ausgerichteten Schraubbolzen der Hilfsrahmen-Anbindungspunkte sind im Crashverlauf mit hohen Scherkräften beansprucht, wodurch diese vorzeitig brechen können. Daraus ergibt sich die Gefahr, dass der Hilfsrahmen - aufgrund zerstörter Hilfsrahmen-Anbindungspunkte - mit hoher Restbeschleunigung gegen die Traktionsbatterie (oder eine andere Funktionseinheit) geschoben wird und diese gegebenenfalls beschädigt.

Aus der WO 2013 127 327 A1 und US2012/187724 ist ein Hilfsrahmen für ein Fahrzeug bekannt,
wobei der Hilfsrahmen mehrere Befestigungspunkte zur Fahrzeug-Karosserie aufweist. Insbesondere die hinteren Befestigungspunkte werden über eine Konsole zur Fahrzeug-Karosserie hin überbrückt.

Aus der US 667 9523 B2 und aus der US 2017 057 547 A1 sind lasteinleitende Stützen bekannt. Diese sind sowohl an Front- als auch an Heckachsträgern verbaut und an der Fahrzeug-Karosserie angebunden. Aus der DE 10 2008 015 182 A1 ist eine Hilfsrahmen bekannt, der über mehrere Befestigungselemente an der Fahrzeug-Karosserie befestigt ist, wobei zusätzliche Lastübertragungsstreben zwischen dem Hilfsrahmen und der Fahrzeug-Karosserie geschaltet sind, die bei Versagen der Befestigungselemente die Crashenergie in die Fahrzeug-Karosserie einleiten.

Die Aufgabe der Erfindung besteht darin, eine Karosseriestruktur für ein Fahrzeug bereitzustellen, bei der der Hilfsrahmen sowie die Funktionseinheit im Vergleich zum Stand der Technik besser gegen eine frontcrashbedingte Beschädigung geschützt sind.

Die Aufgabe ist durch die Merkmale des Anspruches 1 gelöst. Bevorzugte Weiterbildungen der Erfindung sind in den Unteransprüchen offenbart.

Gemäß dem kennzeichnenden Teil des Anspruches 1 weist die Karosseriestruktur zumindest eine Lasteinleitungsstrebe auf, die zwischen der Funktionseinheit und dem Hilfsrahmen kraftübertragend abgestützt ist und einen Längsversatz zwischen der Funktionseinheit und dem Hilfsrahmen überbrückt. Im Frontcrashfall bildet sich einerseits über die Hilfsrahmen-Anbindungspunkte ein erster Lastpfad, über den Crashenergie vom Hilfsrahmen in die Karosseriestruktur eingeleitet wird. Zusätzlich bildet die Lasteinleitungsstrebe einen zweiten Lastpfad, über den die Crashenergie vom Hilfsrahmen direkt in die Funktionseinheit eingeleitet wird. Auf diese Weise werden die Hilfsrahmen-Anbindungspunkte im Frontcrashfall entlastet, wodurch deren frontcrashbedingte Zerstörung vermieden werden kann.

Die Lasteinleitungsstrebe kann an zumindest einem hinteren Streben-Anbindungspunkt an der Funktionseinheit angebunden sein. Bevorzugt weist die Lasteinleitungsstrebe zumindest einen hinteren vertikalen Anbindungsflansch auf, der unter Bildung einer in der Fahrzeugquer- und -hochrichtung aufgespannten vertikalen Fügeebene an der Funktionseinheit abgestützt ist. Zudem ist der hintere Anbindungsflansch der Lasteinleitungsstrebe mittels eines Fügeelementes, insbesondere eines Schraubbolzens, in einer, in der Fahrzeuglängsrichtung fluchtenden Fügerichtung (das heißt Schraubrichtung) befestigt. Auf diese Weise ist gewährleistet, dass der hintere Streben-Anbindungspunkt der Lasteinleitungsstrebe im Frontcrashfall nicht auf Scherung, sondern auf Druck belastet wird.

Die Lasteinleitungsstrebe kann zudem über zumindest einen vorderen Streben-Anbindungspunkt am Hilfsrahmen angebunden sein. In einer technischen Realisierung kann die Lasteinleitungsstrebe an einer, in Fahrzeuglängs- und -querrichtung aufgespannten, horizontalen Fügeebene am Hilfsrahmen angebunden sein. Die Lasteinleitungsstrebe kann dabei mit einem Fügeelement (das heißt Schraubbolzen) in einer Fahrzeughochrichtung fluchtenden Fügerichtung (das heißt Schraubrichtung) befestigt sein.

Die Lasteinleitungsstrebe kann in Doppelfunktion nicht nur zur Kraftüberleitung dienen, sondern auch als ein Deformationselement ausgebildet sein, das sich im Frontcrashfall unter Abbau von Crashenergie verformt. Hierzu kann die Lasteinleitungsstrebe bevorzugt gabelförmig oder U-förmig ausgebildet sein, und zwar mit einem am Hilfsrahmen angebundenen Quersteg, von dem zumindest zwei Strebenarme nach fahrzeughinten abragen und an der dahinter liegenden Funktionseinheit angebunden sind. Die Strebenarme sowie der Quersteg können bevorzugt materialeinheitlich und/oder einstückig ausgebildet sein.

In einer technischen Umsetzung kann der Hilfsrahmen über die karosserieseitigen Hilfsrahmen-Anbindungspunkte an Karosserie-Längsträgern angebunden sein. Die Lasteinleitungsstrebe kann bevorzugt unterhalb der Hilfsrahmen-Anbindungspunkte in horizontaler Ebene verlaufen. Entsprechend sind die vorderen und/oder hinteren Streben-Anbindungspunkte über einen freien Höhenversatz unterhalb der Hilfsrahmen-Anbindungspunkte angeordnet. Im Frontcrashfall ergibt sich somit eine obere Lastebene, in der die Hilfsrahmen-Anbindungspunkte eingebunden sind, und eine untere Lastebene, in der die Lasteinleitungsstrebe eingebunden ist.

Im Hinblick auf eine bauteilsteife Ausbildung kann der Hilfsrahmen seitliche Längsträger aufweisen, die über einen vorderen Querträger und einen hinteren Querträger miteinander verbunden sind. Der Hilfsrahmen kann zur weiteren Aussteifung eine, ein Schubfeld bildende flächige oder fachwerkartige Versteifungsstruktur aufweisen, die im Rahmen-Innenraum zwischen den Längs- und Querträgern aufgespannt ist. Im Hinblick auf eine Montagevereinfachung ist es bevorzugt, wenn diese Versteifungsstruktur gemeinsam mit der Lasteinleitungsstrebe über den hinteren Streben-Anbindungspunkt am Hilfsrahmen befestigt ist.

Die Funktionseinheit kann beispielhaft eine Traktionsbatterie für ein elektrisch betriebenes Fahrzeug sein. In diesem Fall kann der frontseitige Hilfsrahmen zumindest eine, die Fahrzeugräder antreibende Elektromaschine tragen.

Nachfolgend ist ein Ausführungsbeispiel der Erfindung anhand der beigefügten Figuren beschrieben.

Es zeigen:
- Figur 1: einen Vorderwagen-Bereich der Karosseriestruktur des Fahrzeugs;
- Figur 2 und 3: jeweils Perspektivansichten des Unterbodens der Karosseriestruktur.

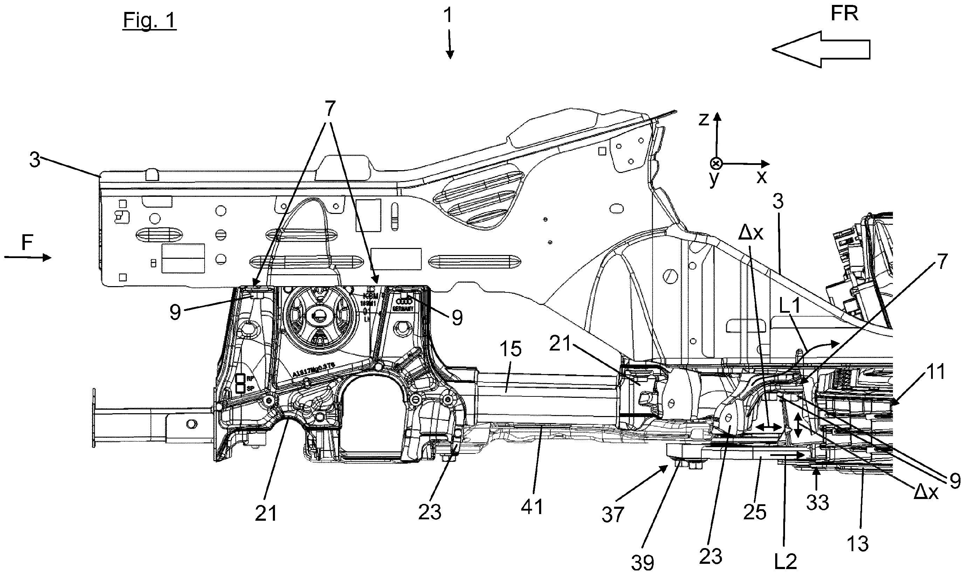

In der Figur 1 ist ein Vorderwagen-Bereich 1 einer Karosseriestruktur eines elektrisch betriebenen Fahrzeugs gezeigt. Demzufolge weist eine Karosseriestruktur des Fahrzeugs seitliche Karosserie-Längsträger 3 auf, von denen in der Figur 1 lediglich einer gezeigt ist. Die Karosserie-Längsträger 3 erstrecken sich nach fahrzeugvorne mit einem S-Schlag nach oben bis zur Fahrzeugfront. Zudem ist in der Karosseriestruktur ein Hilfsrahmen 5 für eine Fahrzeug-Vorderachse verbaut, die eine nicht gezeigte Elektromaschine zum Antrieb der Vorderräder des Fahrzeugs aufweist. Der Hilfsrahmen 5 ist über Hilfsrahmen-Anbindungspunkte 7 (in einer Fügerichtung von unten) an einer Unterseite des Karosserie-Längsträgers 3 verschraubt, wobei deren Schraubbolzen 9 in der Fahrzeughochrichtung z ausgerichtet sind. Im Unterboden des Fahrzeugs ist zudem eine Traktionsbatterie 11 zur Stromversorgung der Elektromaschine angeordnet, die ein bauteilsteif ausgelegtes Batteriegehäuse 13 mit darin angeordneten Batterie-Modulen aufweist. Die Traktionsbatterie 11 ist in einer Fahrtrichtung FR hinter dem Hilfsrahmen 5 angeordnet und von diesem über einen freien Längsversatz Δx (Figur 1) beabstandet.

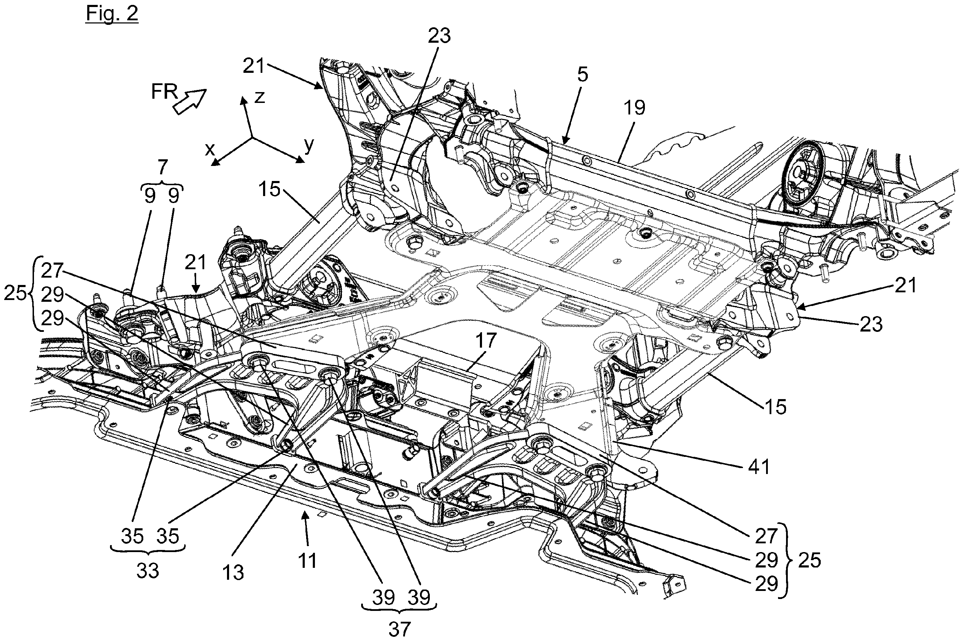

Der Hilfsrahmen 5 weist seitliche Längsträger 15 auf, die über einen hinteren Querträger 17 und einen vorderen Querträger 19 (Figur 2) miteinander verbunden sind, wobei die Längsträger 15 und die Querträger 17 an hinteren und vorderen Eckknoten-Elementen 21 (zum Beispiel Aluminium-Gussteile) zusammenlaufen. An den Eckknoten-Elementen 21 sind unter anderem Lagerkonsolen 23 für nicht dargestellte Fahrwerkslenker sowie die bereits erwähnten Hilfsrahmen-Anbindungspunkte 7 ausgebildet.

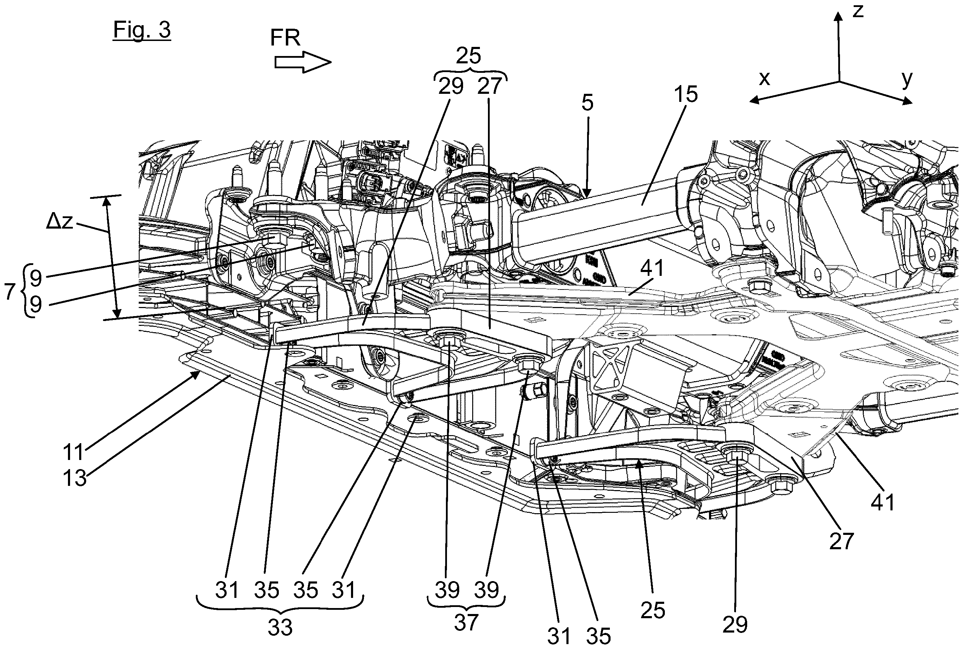

Wie aus den Figuren 2 oder 3 hervorgeht, sind zwischen dem Hilfsrahmen 5 und dem Batteriegehäuse 13 zwei Lasteinleitungsstreben 25 abgestützt, die den Längsversatz Δx zwischen der Traktionsbatterie 11 und dem Hilfsrahmen 5 überbrücken. Jede dieser Lasteinleitungsstreben 25 ist in etwa gabelförmig oder U-förmig ausgebildet, und zwar mit einem am hinteren Querträger 17 angebundenen Quersteg 27, von dem zwei Strebenarme 29 nach fahrzeughinten abragen. Die Strebenarme 29 weisen rückseitig jeweils Anbindungsflansche 31 (Figur 3) auf, die an hinteren Streben-Anbindungspunkten 33 flächig am Batteriegehäuse 13 angebunden sind, und zwar an einer Fügeebene yz, die in Fahrzeugquer- und -hochrichtung y, z aufgespannt ist. Die heckseitigen Anbindungsflansche 31 der beiden Strebenarme 29 sind mit Schraubbolzen 35 am Batteriegehäuse 13 (in einer Fügerichtung nach fahrzeughinten) verschraubt, so dass sich die Schraubbolzen 35 in der Fahrzeuglängsrichtung x erstrecken. Wie aus der Figur 1 oder 3 hervorgeht, sind die beiden Lasteinleitungsstreben 25 um einen freien Höhenversatz Δz unterhalb der Hilfsrahmen-Anbindungspunkte 7 angeordnet.

Der Quersteg 27 der jeweiligen Lasteinleitungsstrebe 25 ist über vordere Streben-Anbindungspunkte 37 am hinteren Querträger 17 des Hilfsrahmens 5 in einer Fügerichtung nach fahrzeugoben verschraubt, und zwar an die Hilfsrahmen-Unterseite. Deren Schraubbolzen 39 sind somit in der Fahrzeughochrichtung z ausgerichtet. Die Lasteinleitungsstreben 25 sind nicht direkt in Anlage mit dem Hilfsrahmen 5 verspannt, sondern vielmehr unter Zwischenlage einer flächigen, als Schubfeld wirkenden Versteifungsstruktur 41, die sich versteifend über den Hilfsrahmen-Innenraum erstreckt.

Mittels der in den Figuren 1 bis 3 gezeigten Karosseriestruktur ergibt sich in einem Frontcrashfall eine Lastverteilung, bei der zunächst die Aufprallkräfte F (Figur 1) in den Hilfsrahmen 5 eingeleitet werden und unter Bildung eines ersten Lastpfads L1 (Figur 1) über die Hilfsrahmen-Anbindungspunkte 7 in die Karosserie-Längsträger 3 überführt werden. Zudem wird durch die beiden Lasteinleitungsstreben 25 ein zweiter Lastpfad L2 (Figur 1) bereitgestellt, über den die Aufprallkräfte F vom Hilfsrahmen 5 direkt in das Batteriegehäuse 13 eingeleitet werden. Auf diese Weise werden die Hilfsrahmen-Anbindungspunkte 7 im Frontcrashfall entlastet, wodurch ein vorzeitiger Bruch der Schraubbolzen 9 (Figur 3) der Hilfsrahmen-Anbindungspunkte 7 verhindert werden kann.

Im Unterschied zu den heckseitigen Streben-Anbindungspunkten 33 sind an den vorderen Streben-Anbindungspunkten 37 die Lasteinleitungsstrebe 25 an einer, in der Fahrzeuglängs- und -querrichtung x, y aufgespannten, horizontalen Fügeebene xy am Hilfsrahmen 5 angebunden. Entsprechend ist in der Figur 3 der Schraubbolzen 39 in einer Fügerichtung nach fahrzeugoben verschraubt und in der Fahrzeughochrichtung z ausgerichtet.

Die Strebenarme 29 der Lasteinleitungsstreben 25 sind dabei so geometrisch ausgelegt, dass sie im Frontcrashfall zusätzlich auch als Deformationselemente wirken, die sich unter Abbau von Crashenergie verformen.

## Patentansprüche

1. Karosseriestruktur für ein Fahrzeug, mit einem Hilfsrahmen (5) für eine Fahrzeug-Vorderachse, die eine Antriebskomponente trägt und an Hilfsrahmen-Anbindungspunkten (7) an der Karosseriestruktur (3) angebunden ist, und mit einer Funktionseinheit (11), die in der Fahrzeuglängsrichtung (x) um einen Längsversatz (Δx) hinter dem Hilfsrahmen (5) im Fahrzeug (1) verbaut ist, wobei in einem Frontcrashfall die in den Hilfsrahmen (5) eingeleiteten Aufprallkräfte (F) unter Bildung eines ersten Lastpfads (L1) über die Hilfsrahmen-Anbindungspunkte (7) in die Karosseriestruktur einleitbar sind, **dadurch gekennzeichnet, dass** die Karosseriestruktur zumindest eine Lasteinleitungsstrebe (25) aufweist, die zwischen dem Hilfsrahmen (5) und dem Funktionseinheit (11) kraftübertragend abgestützt ist und den Längsversatz (Δx) überbrückt, und dass im Frontcrashfall die Lasteinleitungsstrebe (25) einen zweiten Lastpfad (L2) bildet, über den die Aufprallkräfte (F) in die Funktionseinheit (11) einleitbar sind, wodurch die Hilfsrahmen-Anbindungspunkte (7) des Hilfsrahmens (5) im Frontcrashfall entlastet sind.

2. Karosseriestruktur nach Anspruch 1, **dadurch gekennzeichnet, dass** die Lasteinleitungsstrebe (25) über zumindest einen hinteren Streben-Anbindungspunkt (33) an der Funktionseinheit (11) angebunden ist, und dass die Lasteinleitungsstrebe (25) an einer in Fahrzeugquer- und -hochrichtung (y, z) aufgespannten vertikalen Fügeebene (yz) an der Funktionseinheit (11) abgestützt ist, und/oder dass die Lasteinleitungsstrebe (25) mit einem Fügeelement (35) in einer in Fahrzeuglängsrichtung (x) fluchtenden Fügerichtung an der Funktionseinheit (11) befestigt ist.

3. Karosseriestruktur nach Anspruch 1 oder 2, **dadurch gekennzeichnet, dass** die Lasteinleitungsstrebe (25) über zumindest einen vorderen Streben-Anbindungspunkt (37) am Hilfsrahmen (5) angebunden ist, und/oder dass die Lasteinleitungsstrebe (25) an einer in Fahrzeuglängs- und -querrichtung (x, y) aufgespannten, horizontalen Fügeebene (x, y) am Hilfsrahmen (5) angebunden ist, und/oder dass die Lasteinleitungsstrebe (25) mit einem Fügeelement (39) in einer in Fahrzeughochrichtung (z) fluchtenden Fügerichtung am Hilfsrahmen (5) befestigt ist.

4. Karosseriestruktur nach Anspruch 1, 2 oder 3, **dadurch gekennzeichnet, dass** die Lasteinleitungsstrebe (25) als sein Deformationselement wirkt, das sich im Frontcrashfall unter Abbau von Crashenergie verformt.

5. Karosseriestruktur nach einem der vorhergehenden Ansprüche, **dadurch gekennzeichnet, dass** die Lasteinleitungsstrebe (25) in etwa gabelförmig ausgebildet ist, und zwar mit einem am Hilfsrahmen (5) anbindbaren Quersteg (27), von dem zumindest zwei Strebenarme (29) nach fahrzeughinten abragen und an der Funktionseinheit (11) angebunden sind.

6. Karosseriestruktur nach einem der vorhergehenden Ansprüche, **dadurch gekennzeichnet, dass** der Hilfsrahmen (5) an den Hilfsrahmen-Anbindungspunkten (7) an Karosserie-Längsträgern (3) angebunden ist, und/oder dass die hinteren Streben-Anbindungspunkte (33) über einen Höhenversatz (Δz) unterhalb der Hilfsrahmen-Anbindungspunkte (7) angeordnet sind, wodurch sich im Frontcrashfall eine obere Lastebene, in der die Hilfsrahmen-Anbindungspunkte (7) eingebunden sind, und eine untere Lastebene bildet, in der die Lasteinleitungsstrebe (25) eingebunden ist.

7. Karosseriestruktur nach einem der vorhergehenden Ansprüche, **dadurch gekennzeichnet, dass** der Hilfsrahmen (5) seitliche Längsträger (15) aufweist, die über einen hinteren Querträger (17) und einen vorderen Querträger (19) miteinander verbunden sind, und/oder dass der Hilfsrahmen (5) zusätzlich eine flächige oder fachwerkartige Versteigungsstruktur (41) aufweist, die zusammen mit der Lasteinleitungsstrebe (25) über den vorderen Streben-Anbindungspunkt (37) am Hilfsrahmen (5) befestigt ist.

8. Karosseriestruktur nach einem der vorhergehenden Ansprüche, **dadurch gekennzeichnet, dass** die Lasteinleitungsstrebe (25) einen hinteren vertikalen Anbindungsflansch (31) aufweist, der an der Funktionseinheit (11) abgestützt ist, und/oder das sich die Lasteinleitungsstrebe (25) in einer horizontalen Ebene erstreckt, so dass im Frontcrashfall der erste Lastpfad (L1) und der zweite Lastpfad (L2) in etwa parallel zueinander ausgerichtet sind.

9. Karosseriestruktur nach einem der vorhergehenden Ansprüche, **dadurch gekennzeichnet, dass** die Funktionseinheit (11) eine Traktionsbatterie oder dergleichen ist.

10. Karosseriestruktur nach einem der vorhergehenden Ansprüche, **dadurch gekennzeichnet, dass** das Fahrzeug (1) zumindest teilweise elektrisch betrieben ist, und dass der Hilfsrahmen (5) zumindest eine die Fahrzeugräder antreibende Elektromaschine trägt.

## Claims

1. Body structure for a vehicle, with a subframe (5) for a vehicle-front axle, which supports a drive component and is connected to the body structure (3) at subframe-connection points (7), and with a functional unit (11), which is installed in the vehicle (1) behind the subframe (5) by a longitudinal offset (Δx) in the longitudinal direction of the vehicle (x), wherein in the event of a head-on crash, the impact forces (F) introduced to the subframe (5) can be introduced to the body structure by forming a first load path (L1) via the subframe-connection points (7), **characterised in that** the body structure has at least one load introduction strut (25), which is supported in a force-transmitting manner between the subframe (5) and the functional unit (11) and bridges the longitudinal offset (Δx), and **in that** in the event of a head-on crash the load introduction strut (25) forms a second load path (L2) via which the impact forces (F) can be introduced into the functional unit (11), whereby the the subframe-connection points (7) of the subframe (5) are relieved of load in the event of a head-on crash.

2. Body structure according to claim 1, **characterised in that** the load introduction strut (25) is connected to the functional unit (11) via at least one rear strut connection point (33), and **in that** the load introduction strut (25) is supported on the functional unit (11) at a vertical joining plane (y, z) spanned in transverse and vertical direction of the vehicle (y, z), and/or **in that** the load introduction strut (25) is fixed to the functional unit (11) by a joining element (35) in a joining direction aligned with the longitudinal direction of the vehicle (x).

3. Body structure according to claim 1 or 2, **characterised in that** the load introduction strut (25) is connected to the subframe (5) by at least one front strut connection point (37), and/or **in that** the load introduction strut (25) is connected to the subframe (5) at a horizontal joining plane (x, y) spanned in longitudinal and transverse direction (x, y) of the vehicle, and/or **in that** the load introduction strut (25) is fixed to the subframe (5) by a joining element (39) in a joining direction aligned in the vertical direction of the vehicle (z).

4. Body structure according to claim 1, 2 or 3, **characterised in that** the load introduction strut (25) acts as its deformation element, which deforms in the event of a head-on crash while dissipating crash energy.

5. Body structure according to any of the preceding claims, **characterised in that** the load introduction strut (25) is configured to be approximately fork-like, and with a crossbar (27) which can be connected to the subframe (5), from which crossbar at least two strut arms (29) project towards the rear of the vehicle and are connected to the functional unit (11).

6. Body structure according to any of the preceding claims, **characterised in that** the subframe (5) is connected to body-longitudinal members (3) at the subframe-connection points (7) and/or **in that** the rear strut connection points (33) are arranged with a height offset (Δz) below the subframe-connection points (7), whereby in the event of a head-on crash an upper load plane is formed in which the subframe-connection points (7) are incorporated, and a lower load plane is formed in which the load introduction strut (25) is incorporated.

7. Body structure according to any of the preceding claims, **characterised in that** the subframe (5) has lateral longitudinal members (15), which are joined together by a rear cross member (17) and a front cross member (19), and/or **in that** the subframe (5) also has a flat or truss-like stiffening structure (41), which together with the load introduction strut (25) is fixed via the front strut connection point (37) to the subframe (5).

8. Body structure according to any of the preceding claims, **characterised in that** the load introduction strut (25) has a rear vertical connecting flange (31), which is supported on the functional unit (11), and/or **in that** the load introduction strut (25) extends in a horizontal plane, so that in the event of a head-on crash the first load path (L1) and the second load path (L2) are oriented to be approximately parallel to one another.

9. Body structure according to any of the preceding claims, **characterised in that** the functional unit (11) is a traction battery or the like.

10. Body structure according to any of the preceding claims, **characterised in that** the vehicle (1) is at least partly electrically operated, and **in that** the subframe (5) supports at least one electric machine driving the vehicle wheels.

## Revendications

1. Structure de carrosserie destinée à un véhicule, comprenant un châssis auxiliaire (5) pour un essieu avant de véhicule qui supporte un élément d'entraînement et est relié à la structure de carrosserie (3) au niveau de points de liaison de châssis auxiliaire (7), et comprenant une unité fonctionnelle (11) qui est montée dans le véhicule (1) derrière le châssis auxiliaire (5) avec un décalage longitudinal (Δx) dans le sens longitudinal de véhicule (x), dans laquelle les forces d'impact (F) introduites dans le châssis auxiliaire (5) en cas de collision frontale peuvent être introduites dans la structure de carrosserie par l'intermédiaire des points de liaison de châssis auxiliaire (7) avec formation d'un premier trajet de charge (L1), **caractérisée en ce que** la structure de carrosserie présente au moins une barre d'introduction de charge (25) qui est en appui entre le châssis auxiliaire (5) et l'unité fonctionnelle (11) de manière à transmettre une force et qui couvre le décalage longitudinal (Δx), et **en ce que**, en cas de collision frontale, la barre d'introduction de charge (25) forme un second trajet de charge (L2) par l'intermédiaire duquel les forces d'impact (F) peuvent être introduites dans l'unité fonctionnelle (11), ce qui fait que les points de liaison de châssis auxiliaire (7) du châssis auxiliaire (5) sont délestés en cas de collision frontale.

2. Structure de carrosserie selon la revendication 1, **caractérisée en ce que** la barre d'introduction de charge (25) est reliée à l'unité fonctionnelle (11) par l'intermédiaire d'au moins un point arrière de liaison de barre (33), et **en ce que** la barre d'introduction de charge (25) est en appui sur l'unité fonctionnelle (11) au niveau d'un plan d'assemblage (y, z) vertical s'étendant dans les directions transversale et verticale de véhicule (y, z), et/ou **en ce que** la barre d'introduction de charge (25) est fixée à l'unité fonctionnelle (11) au moyen d'un élément d'assemblage (35) dans une direction d'assemblage alignée avec la direction longitudinale du véhicule (x).

3. Structure de carrosserie selon la revendication 1 ou 2, **caractérisée en ce que** la barre d'introduction de charge (25) est reliée au faux-châssis (5) par l'intermédiaire d'au moins un point avant de liaison de barre (37) et/ou **en ce que** la barre d'introduction de charge (25) est reliée au faux-châssis (5) au niveau d'un plan d'assemblage (x, y) horizontal s'étendant dans les directions longitudinale et transversale de véhicule (x, y) et/ou **en ce que** la barre d'introduction de charge (25) est fixée au faux-châssis (5) au moyen d'un élément d'assemblage (39) dans une direction d'assemblage alignée dans le sens de la hauteur du véhicule (z).

4. Structure de carrosserie selon la revendication 1, 2 ou 3, **caractérisée en ce que** la barre d'introduction de charge (25) fait office d'élément de déformation qui se déforme avec dissipation de l'énergie de collision en cas de collision frontale.

5. Structure de carrosserie selon l'une quelconque des revendications précédentes, **caractérisée en ce que** la barre d'introduction de charge (25) est réalisée approximativement en forme de fourche, à savoir avec une traverse transversale (27) pouvant être reliée au faux-châssis (5) et à partir de laquelle au moins deux bras de barre (29) font saillie vers l'arrière du véhicule et sont reliés à l'unité fonctionnelle (11).

6. Structure de carrosserie selon l'une quelconque des revendications précédentes, **caractérisée en ce que** le faux-châssis (5) est relié à des poutres longitudinales de carrosserie (3) au niveau des points de liaison de faux-châssis (7), et/ou **en ce que** les points arrière de liaison de barre (33) sont agencés en dessous des points de liaison de faux-châssis (7) avec un décalage en hauteur (Δz), ce qui fait qu'un plan de charge supérieur au sein duquel sont intégrés les points de liaison de faux-châssis (7) et un plan de charge inférieur au sein duquel est intégré la barre d'introduction de charge (25) se forment en cas de collision frontale.

7. Structure de carrosserie selon l'une quelconque des revendications précédentes, **caractérisée en ce que** le faux-châssis (5) présente des poutres longitudinales (15) reliés ensemble par l'intermédiaire d'une traverse arrière (17) et d'une poutre transversale (19), et/ou **en ce que** le faux-châssis (5) présente en outre une structure de renforcement (41), plane ou de type treillis, fixée au faux-châssis (5) conjointement avec la barre d'introduction de charge (25) par l'intermédiaire du point avant de liaison de barre (37).

8. Structure de carrosserie selon l'une quelconque des revendications précédentes, **caractérisée en ce que** la barre d'introduction de charge (25) présente une bride de liaison (31) verticale arrière qui est en appui sur l'unité fonctionnelle (11) et/ou **en ce que** la barre d'introduction de charge (25) s'étend dans un plan horizontal de sorte que, en cas de collision frontale, le premier cheminement des charges (L1) et le second cheminement des charges (L2) sont orientés de manière approximativement parallèle l'un par rapport à l'autre.

9. Structure de carrosserie selon l'une quelconque des revendications précédentes, **caractérisée en ce que** l'unité fonctionnelle (11) est une batterie de propulsion ou similaire.

10. Structure de carrosserie selon l'une quelconque des revendications précédentes, **caractérisée en ce que** le véhicule (1) est actionné de manière au moins partiellement électrique, et **en ce que** le faux-châssis (5) supporte au moins une machine électrique entraînant les roues de véhicule.
